# EUROPÄISCHE PATENTSCHRIFT

(11) **EP 1 484 213 B1**
(45) Veröffentlichungstag und Bekanntmachung des Hinweises auf die Patenterteilung: **31.03.2010**
(21) Anmeldenummer: 04011739.2
(22) Anmeldetag: 18.05.2004
(51) Int. Cl.: B60K 31/04

(54) **Verfahren und Vorrichtung zur Regelung der Fahrgeschwindigkeit eines Kraftfahrzeugs**
Method and apparatus for cruise control of a vehicle
Procédé et appareil de régulation de vitesse pour un véhicule

(30) Priorität: 07.06.2003 DE 10325925
(43) Veröffentlichungstag der Anmeldung: 08.12.2004
(73) Patentinhaber: CNH Österreich GmbH, 4300 St. Valentin (AT)
(72) Erfinder: Haas, Werner, Dr.-Ing., 4470 Enns (AT); Huber, Karl, Dipl.-Ing., 4111 Walding (AT)
(74) Vertreter: Feldkamp, Rainer

(56) Entgegenhaltungen:
- EP-A- 1 057 683
- DE-A1- 4 231 821
- DE-A1- 4 420 116
- DE-C1- 10 219 270

## Beschreibung

Die Erfindung betrifft eine Vorrichtung und ein Verfahren zur Regelung der Fahrgeschwindigkeit eines Fahrzeugs, insbesondere für Baufahrzeuge, landwirtschaftliche Maschinen, Nutzfahrzeuge und Traktoren mit einem Stufenlosgetriebe (CVT).

Derartige Vorrichtungen sind als Tempomat bekannt und dienen der selbsttätigen Aufrechterhaltung einer gewünschten Fahrgeschwindigkeit, die durch einen Tempomat-Geschwindigkeitssollwert als Führungsgröße vom Fahrer vorgegeben wird. Die Aufrechterhaltung einer bestimmten Fahrgeschwindigkeit des Fahrzeugs erfolgt üblicherweise in Abhängigkeit des Geländeprofils, verkehrsrechtlicher Bestimmungen oder der bestimmungsgemäßen Aufgabenstellung, wie z.B. die Boden- oder Feldbearbeitung, die mit dem Fahrzeug realisiert wird.

Die Verwendung eines Stufenlosgetriebes bietet gegenüber den Stufengetrieben den Vorteil, dass mit Ihnen die starre Kopplung zwischen Fahrgeschwindigkeit und Motordrehzahl für einzelne Gangstufen aufgehoben werden kann. Ferner kann die Zugkraft des Fahrzeugs gesteigert und der Kraftstoffverbrauch gesenkt werden. Die Anwendung eines Stufenlosgetriebes bei Traktoren ermöglicht in einfacher und in anwenderfreundlicher Weise, die Fahrgeschwindigkeit optimal steuern zu können.

Mit der Kombination eines Stufenlosgetriebes und eines Tempomaten bei Traktoren kann das Fahrverhalten, insbesondere die Anfahrdrehzahl und die Adaption an variable Lastbedingungen, wesentlich verbessert werden.

Aus der DE 42 31 821 A1 ist eine Vorrichtung zur Regelung der Fahrgeschwindigkeit eines Fahrzeugs bekannt, bei der eine Tempomat-Funktionsgruppe zur Regelung der Fahrgeschwindigkeit auf einen innerhalb eines Tempomat-Geschwindigkeitssollwertbereiches beliebig einstellbaren Geschwindigkeitssollwert für verschiedene Fahrbereiche jeweils sowohl für die Vorwärts- als auch Rückwärtsfahrt vorgesehen ist, wobei die Tempomat-Funktionsbaugruppe in üblicher Weise eine Aufwärts-Taste zur Erhöhung, eine Abwärts-Taste zur Verringerung und eine Resume- (Wiederaufnahme-) Taste zur Wiederaufnahme/zum Ausschalten des Tempomat-Geschwindigkeitssollwertes sowie jeweilige Verstellelemente aufweist. Weiterhin ist hierbei ein Kontrollinstrument vorgesehen, das eine Anzeige der in den verschiedenen Fahrbereichen eingestellten Geschwindigkeitssollwerte ermöglicht. Ein Fahrregler ist in Abhängigkeit von den eingestellten Fahrt-Parametern derart ausgebildet, dass eine lastabhängige Motordrehzahl und eine lastabhängige Getriebeübersetzung mittels entsprechender Regler eingestellt wird. Eine Shuttle-Funktionsgruppe dient zur Auswahl der Fahrtrichtung zwischen_einer Vorwärts-, einer Rückwärts- und einer Neutralstellung. Ähnliches ist auch aus DE 102 19 270 C1 bekannt, gemäss Oberbegriff des Anspruchs 1.

In vielen Fällen wird die Betätigung einer Vorrichtung zur Geschwindigkeitsregelung nur dann zugelassen, wenn eine Mindestgeschwindigkeit überschritten wurde. Hierbei kann in Abhängigkeit von der Messung einer Vielzahl von Parametern ein bestimmter Fahrbetrieb ausgewählt oder zugelassen werden, wie dies der DE 102 19 270 C1 zu entnehmen ist.

In der EP 1 114 950 A2 ist ein Fahrgeschwindigkeitsregler in Verbindung mit einem stufenlosen Regelgetriebe offenbart, welches zur Bedienung desselben einen in einem Schlitz geführten Schalthebel aufweist, der zwischen einer maximalen Geschwindigkeitsposition für die Fahrt "vorwärts" und der Fahrt "rückwärts" steuerbar ausgebildet ist, wobei in einer Zwischenstellung der Schalthebel eine Position einnehmen kann, bei der ein gespeicherter Tempomat-Geschwindigkeitssollwert aktiviert werden kann. Ferner weist die Erfindung zwei als Potentiometer ausgebildete Geschwindigkeitsregler für eine erste Geschwindigkeit und eine zweite Geschwindigkeit und einen im Bereich des Lenkrades angeordneten Richtungshebel auf. Ein besonderer Nachteil dieser Erfindung besteht darin, dass kein Tempomat-Geschwindigkeitssollwert im Fahrzeugstillstand eingestellt werden kann.

Bekannt aus dem Stand der Technik ist weiterhin eine Tempomat-Fahrgeschwindigkeitsregeleinrichtung für ein Kraftfahrzeug, die in der DE 100 06 780 C1 offenbart ist. Hierbei ist vorgesehen, dass ein ein Geschwindigkeitsreglersignal abgebender Geschwindigkeitsregler mit einem Zusatzsteuermodul zusammenwirkt, welches ein Zusatzsignal abgibt, welches vom Zusatzsteuermodul mit zunehmender Regelabweichung am Geschwindigkeitsregler entsprechend einer hinterlegten Zuweisungsvorschrift beeinflusst wird. Der Grundgedanke dieser Erfindung besteht darin, dass eine unerwünschte Regelabweichung insbesondere bei profiliertem Gelände dadurch vermieden wird, indem das Zusatzsignal des Zusatzsteuermoduls einem Lastadaptionsglied als unterstützende Sollwertgröße zugeführt wird und damit ein weiteres Regelelement eingespart werden kann.

In der DE 43 04 595 A1 ist ein Fahrgeschwindigkeitsregler für Kraftfahrzeuge offenbart, bei dem zur Aufrechterhaltung der Fahrgeschwindigkeit durch einen Tempomat eine regelmäßige Betätigung eines Tastschalters oder eines Pedals erforderlich ist. Sofern der Tastschalter oder das Pedal nicht betätigt wird, so wird die Geschwindigkeit des Fahrzeugs durch den Fahrgeschwindigkeitsregler auf Null geregelt.

Aus dem Hause Steyr ist ein Tempomat für CVT (stufenloses Getriebe) Traktoren bekannt, bei dem für drei Fahrbereiche, nämlich 0-14 km/h, 0-25 km/h und 0-50 km/h, jeweils für die Fahrt "vorwärts" und die Fahrt "rückwärts" Tempomat-Geschwindigkeitssollwerte während der Fahrt abgespeichert werden können, die dann bei erneutem Fahrtantritt als zuletzt gespeicherte Tempomat-Geschwindigkeitssollwerte aktiviert werden können. Die Speicherung und das Setzen eines neuen Tempomat-Geschwindigkeitssollwertes kann hierbei nur während der Fahrt, aber nicht im Fahrzeugstillstand erfolgen. Dies ist besonders dann nachteilig, wenn zu Beginn der Feldarbeiten die für den nachfolgend auszuführenden Arbeitsvorgang optimale Arbeitsgeschwindigkeit bereits im Fahrzeugstillstand vom Fahrer eingestellt werden soll.

Die Aufgabe der Erfindung besteht darin, ein Verfahren und Vorrichtung zur Regelung der Fahrgeschwindigkeit eines Kraftfahrzeugs zu entwickeln, mit denen bei aktiviertem und deaktiviertem Fahrgeschwindigkeitsbetrieb der Tempomat-Geschwindigkeitssollwert mit hohem Bedienkomfort bei Fahrzeugstillstand als auch während der Fahrt des Fahrzeugs eingestellt werden kann.

Die Aufgabe wird durch die Merkmale der Vorrichtung zur Regelung der Fahrgeschwindigkeit eines Kraftfahrzeugs gemäß Patentanspruch 1 und durch die Merkmale des Verfahrens zur Regelung der Fahrgeschwindigkeit eines Kraftfahrzeugs gemäß Patentanspruch 2 gelöst.

Vorteilhafte Ausgestaltungen der Erfindung sind den Unteransprüchen angegeben.

Bei der erfindungsgemäßen Vorrichtung ist vorgesehen, dass die Vorrichtung eine Tempomat-Funktionsgruppe zur Regelung der Fahrgeschwindigkeit auf einen innerhalb eines Tempomat-Geschwindigkeitssollwertbereiches beliebig einstellbaren Tempomat-Geschwindigkeitssollwert für verschiedene Fahrbereiche jeweils für die Fahrt "vorwärts" und die Fahrt "rückwärts", wobei die Tempomat-Funktionsgruppe ein Verstellelement sowie eine up-Taste zur Erhöhung, eine down-Taste zur Verringerung und eine resume-Taste zur Wiederaufnahme/Ausschalten des Tempomat-Geschwindigkeitssollwertes aufweist, wobei der Tempomat-Geschwindigkeitssollwert durch eine kurzzeitige sequentielle Betätigung der up-Taste bzw. der down-Taste inkrementiell erhöht oder dekrementiell verringert wird. Das Inkrement bzw. das Dekrement ist eine Funktion der aktuellen Fahrgeschwindigkeit ist. Ein Kontrollinstrument weist einen Leistungs-Monitor auf, welcher der optischen Anzeige der in den verschiedenen Fahrbereichen eingestellten Geschwindigkeitssollwerte für die Fahrt "vorwärts" und die Fahrt "rückwärts" dient, Ein Fahrregler ist in Abhängigkeit der eingestellten Fahrparameter derart ausgebildet, dass eine lastabhängige Motordrehzahl und lastabhängige Getriebeübersetzung zur Einstellung einer des Tempomat-Geschwindigkeitssollwertes entsprechenden Fahrgeschwindigkeit verwendet werden. Eine Shuttle-Funktionsgruppe dient Auswahl der Fahrtrichtung und weist einen Shuttle-Bedienhebel mit den Schaltstellungen "vorwärts", "rückwärts" und "neutral"auf, wobei mit den Schaltstellungen "vorwärts" und "rückwärts" ein Fahrgeschwindigkeitsbegrenzungsbetrieb aktiviert wird.

Die Motordrehzahl wird hierbei mittels eines Motorreglers und die Getriebeübersetzung mittels eines Getriebereglers eingestellt. Mit dem stufenlosen Getriebe in Verbindung mit der Vorrichtung zur Regelung der Fahrgeschwindigkeit erfolgt eine vollautomatische Anpassung der Motordrehzahl und der Getriebeübersetzung an die Last durch den Fahrregler. Der Shuttle-Bedienhebel dient neben der Vorauswahl der Fahrtrichtung auch der Aktivierung des Fahrgeschwindigkeitsbetriebs. Insbesondere wird dieser Shuttle-Bedienhebel dazu genutzt, gemeinsam mit der resume-Taste einen zuvor gespeicherten Tempomat-Geschwindigkeitssollwerte zu reaktivieren. Die Möglichkeit, im Fahrzeugstillstand einen Tempomat-Geschwindigkeitssollwert zu setzen besteht darin, den Shuttle-Bedienhebel gemeinsam mit der up-Taste oder der down-Taste zu betätigen. Hierbei muss die Fahrrichtung zwangsläufig vorgewählt sein. Die gesamte Tempomat-Funktionsgruppe ist im Bereich der Armlehne des Fahrers im Fahrzeug derart angeordnet, dassin eienr bequemen und entspannten Sitzposition die Hand des aufgelehnten Armes die Tempomat-Funktionsgruppe problemlos ergreifen kann und die entsprechenden Steuerroutinen mit ihr ausgelöst werden können. Die Tempomat-Funktionsgruppe ein den Bedienkomfort ergänzendes Verstellelement auf, das derart manuell bedienbar ausgebildet ist, dass durch Betätigung dessen der voreingestellte Tempomat-Geschwindigkeitssollwert kurzzeitig unterschritten werden kann, ohne dass sich die Grundeinstellung des Tempomaten dabei ändert. Im einfachsten Fall kann dieses Verstellelement ein Kippschalter oder ein dreh- und justierbares Rad sein. Das Verfahren zur Regelung der Fahrgeschwindigkeit eines Kraftfahrzeugs kann in die Aktivierung und in die Deaktivierung des Fahrgeschwindigkeitsbegrenzungsbetriebs klassifiziert werden, wobei eine Veränderung des Tempomat-Geschwindigkeitssollwertes vorzugsweise bei Stillstand oder wahlweise im Fahrbetrieb des Fahrzeugs realisiert wird. Bevorzugt erfolgt die Aktivierung des Fahrgeschwindigkeitsbegrenzungsbetriebs bei Überschreiten einer Minimalgeschwindigkeit zur Übernahme der aktuellen Fahrgeschwindigkeit als aktueller Tempomat-Geschwindigkeitssollwert durch eine Betätigung der up-Taste, die in Griffweite des Fahrers im Bereich der Armlehne angeordnet ist. Als Minimalgeschwindigkeit wird nachfolgend diejenige Geschwindigkeit bezeichnet, die einer minimalen Fahrgeschwindigkeit zwischen 1 km/h und 3 km/h entspricht.

In einer bevorzugten Ausgestaltungsvariante der Erfindung beträgt die Minimalgeschwindigkeit ca. 1 km/h. Die Minimalgeschwindigkeit als Parameter dient vor allem dazu, bei blockierten Antriebsrädern, zum Beispiel im Winter beim Schneeräumen, ein missbräuchliches Reaktivieren eines gespeicherten Tempomat-Geschwindigkeitssollwertes zu vermeiden. Ein besonderer Vorteil der Erfindung besteht darin, dass bei aktiviertem Fahrgeschwindigkeitsbegrenzungsbetrieb in Abhängigkeit der Zeitdauer und der Sequenz der Betätigung der up-Taste bzw. der down-Taste unterschiedliche Möglichkeiten der Speicherung eines Tempomat-Geschwindigkeitssollwertes bestehen. Mit einer kurzzeitigen, sequentiellen Betätigung der up-Taste bzw. der down-Taste wird der Tempomat-Geschwindigkeitssollwert inkrementiell erhöht oder dekrementiell verringert. Diese Inkremente bzw. Dekremente sind im einfachsten Fall vordefiniert oder verändern sich in Abhängigkeit der aktuellen Fahrgeschwindigkeit des Fahrzeugs. Die stufenweise Geschwindigkeitserhöhung oder Geschwindigkeitsverringerung folgt damit einer Funktion der aktuellen Fahrgeschwindigkeit. Im Gegensatz dazu führt ein längeres, stetiges Betätigen der up-Taste bzw. der down-Taste zu einer der Betätigungszeit proportionalen Erhöhung des Tempomat-Geschwindigkeitssollwertes. Die Reaktivierung eines zuvor gespeicherten Tempomat-Geschwindigkeitssollwertes bei Unterschreiten der Minimalgeschwindigkeit erfolgt durch die gleichzeitige Betätigung der resume-Taste und des Shuttle-Bedienhebels. Eine Deaktivierung des Fahrgeschwindigkeitsbegrenzungsbetriebs kann neben den bekannten Bremsen, wie z. B. die Fußbremse, die Handbremse oder die Motorstaubremse, auch durch eine Betätigung der resume-Taste ausgelöst werden. Zur Vermeidung der Deaktivierung des Fahrgeschwindigkeitsbegrenzungsbetriebs beim Betätigen der Fußbremse ist im Bereich der Tempomat-Funktionsgruppe eine manuell bedienbare Lenkbremse ausgebildet. Diese Lenkbremse verhindert bei einem kurzzeitigen Wende- und Bremsmanöver auf dem Feld, dass der Fahrer beim Wiedereinspuren erneut den Fahrgeschwindigkeitsbegrenzungsbetrieb aktivieren muss. Durch die zusätzliche Möglichkeit der Deaktivierung des Fahrgeschwindigkeits-begrenzungsbetriebs durch Betätigung der resume-Taste kann der Fahrer sehr schnell auf etwaige Hindernisse oder auch technische Unzulänglichkeiten seines Fahrzeugs reagieren. Ein wiederholtes Betätigen dieser resume-Taste aktiviert wieder den Fahrgeschwindigkeitsbegrenzungsbetrieb mit dem in dem jeweiligen Fahrbereich zuvor gespeicherten Tempomat-Geschwindigkeitssollwert.

Wie in der Beschreibung zu dem Shuttle-Bedienhebel bereits ausgeführt, kann bei deaktiviertem Fahrgeschwindigkeitsbegrenzungsbetrieb durch eine mittels des Shuttle-Hebels eingestellter Fahrtrichtungsauswahl und gleichzeitiger Betätigung der up-Taste bzw. der down-Taste ein Tempomat-Geschwindigkeitssollwert in den Fahrregler übernommen und dort als aktueller Tempomat-Geschwindigkeitssollwert abgespeichert werden. Diese komfortable Handhabung der Einstellung eines neuen Tempomat-Geschwindigkeitssollwertes im Stillstand des Fahrzeugs vor Fahrtantritt ist besonders vorteilhaft in Bezug auf sicherheitsrelevante Aspekte, wie z.B. der ununterbrochene Inaugenscheinnahme des zu bearbeitenden Geländes oder des Transportgutes. Da sich der Fahrer bereits unmittelbar beim Inbewegungsetzen des Traktors sich beispielsweise auf die eigentlichen Tansport- oder Räumarbeiten konzentrieren muss, versteht sich diese Voreinstellung eines Tempomat-Geschwindigkeitssollwertes als notwendig.

Die signifikanten und als neu zu beurteilenden Merkmale und Vorteile der Erfindung sind im Wesentlichen:
■ Automatische Anpassung der Motordrehzahl und der Getriebeübersetzung an die Last durch den Fahrregler bei aktiviertem Fahrgeschwindigkeitsbegrenzungsbetrieb
■ Einstellung des Tempomat-Geschwindigkeitssollwertes bei Fahrzeugstillstand als auch während der Fahrt bei aktiviertem oder deaktiviertem Fahrgeschwindigkeitsbegrenzungsbetrieb ist möglich
■ Möglichkeit, durch eine kurzzeitige sequentielle Betätigung der up-Taste bzw. der down-Taste den Tempomat-Geschwindigkeitssollwert bei aktiviertem Fahrgeschwindigkeitsbegrenzungsbetrieb inkrementiell zu erhöhen oder dekrementiell zu verringern
■ zusätzliche Möglichkeit der Deaktivierung des Fahrgeschwindigkeitbegrenzungsbetriebs durch Betätigung der resume-Taste
■ temporäre Veränderung einer momentan eingestellten und gefahrenen Tempomatgeschwindigkeit

Nachstehend wird die Erfindung beispielhaft anhand genannter Zeichnungen näher erläutert.

Dabei zeigen:
- Fig. 1:: Shuttle-Funktionsgruppe,
- Fig. 2:: Tempomat-Funktionsgruppe,
- Fig. 3:: Kontrollinstrument
- Fig. 4:: Signalflussplan

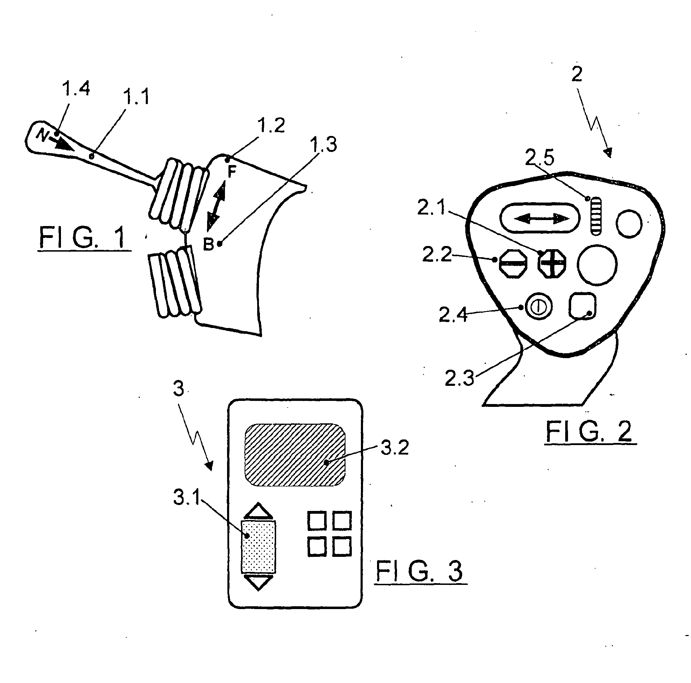

Fig. 1 illustriert die Shuttle-Funktionsgruppe 1 in einer vereinfachten Darstellungsform. Mittels des Shuttle-Bedienhebels 1.1 können die Fahrtrichtungen "vorwärts" oder "rückwärts" ausgewählt werden, für die entweder ein gewünschter Tempomat-Geschwindigkeitssollwert abgespeichert oder ein bereits abgespeicherter Tempomat-Geschwindigkeitssollwert zum Fahren im Fahrgeschwindigkeitsbegrenzungsbetrieb reaktiviert werden soll. Erfindungsgemäß kann der Shuttle-Bedienhebel 1.1 im Fahrzeugstillstand oder auch im Fahrbetrieb verwendet werden. Gemäß Fig. 1 erfolgt eine Betätigung des Shuttle-Hebels 1.1 in einer Ebene, die üblicherweise orthogonal zur Längserstreckung des nichtdargestellten Fahrzeugs ausgerichtet ist.

Zwischen den Schaltstellungen "vorwärts" 1.2 und "rückwärts" 1.3 ist eine weitere Schaltstellung wählbar, die als Neutralstellung 1.4 bezeichnet wird. In dieser Schaltstellung des Shuttle-Hebels 1.1 ist der Fahrgeschwiridigkeitbegrenzungsbetrieb deaktiviert, d.h. ein Fahren ist ausschließlich nur mittels kontinuierlicher Betätigung des Gaspedals realisierbar.

Die in Fig. 2 dargestellte Tempomat-Funktionsgruppe ist mit dem Bezugszeichen 2 und die zugehörigen Komponenten dieser Tempomat-Funktionsgruppe mit den Bezugszeichen 2.1 bis 2.5 gekennzeichnet. Eine Erhöhung bzw. eine Verringerung des Tempomat-Geschwindigkeitssollwertes wird mit der Taste 2.1 bzw. der Taste 2.2 realisiert. Des Weiteren umfasst die Tempomat-Funktionsgruppe 2 eine resume-Taste 2.4, die zum Deaktivieren bzw. zur Wiederaufnahme des Fahrgeschwindigkeitsbegrenzungsbetriebs dient. Eine Wiederaufnahme des Fahrgeschwindigkeitsbegrenzungsbetriebs kann bei Fahrzeugstillstand als auch während der Fahrt realisiert werden. In Abhängigkeit des eingestellten Fahrbereiches verändert das Fahrzeug seine aktuelle Fahrgeschwindigkeit bis zum Erreichen des reaktivierten Tempomat-Geschwindigkeitssollwertes im jeweiligen Fahrbereich.

Zur Vermeidung der Deaktivierung des Fahrgeschwindigkeitbegrenzungsbetriebs beim Bremsen des Fahrzeugs, insbesondere bei Wendemanövern beim Erreichen des Feldendes bei der Feldbearbeitung, ist eine Lenkbremse 2.3 vorgesehen, die manuell betätigt wird. Hierbei werden während des Lenkereinschlags einseitig die Innenräder des Fahrzeugs zur Realisierung eines minimalen Wendekreises vom Fahrer abgebremst, wobei der Fahrgeschwindigkeitsbegrenzungsbetrieb aktiviert bleibt. Nach erfolgtem Wendemanöver beschleunigt das Fahrzeug selbsttätig bis auf den aktuellen Tempomat-Geschwindigkeitssollwert.

Eine weitere erfindungsgemäße Komponente der Tempomat-Funktionsgruppe ist das mit dem Bezugszeichen 2.5 gekennzeichnete Verstellelement in der Ausführungsform als drehbares, justierbares Rad ähnlich dem einer Computermaus. Dieses Verstellelement dient dazu, den der Fahrgeschwindigkeit entsprechenden Tempomat-Geschwindigkeitssollwert temporär unter- bzw. überschreiten zu können. In der Vergangenheit hat sich gezeigt, dass den Fahrer bei Feldarbeiten unerwartet Hindernisse, beispielsweise Tiere oder Menschen, begegnen können. Eine sofortige Reaktion auf diese vorgenannten Hindernisse, ohne dass explizit die Grundeinstellung der Tempomat-Geschwindigkeitssollwerte verändert werden muss, kann damit problemlos umgesetzt werden.

Das Kontrollinstrument, welches u. a. zum Monitoring 3.2 der in den jeweiligen Fahrbereichen gespeicherten Tempomat-Geschwindigkeitssollwerte für die Fahrt "vorwärts" und die Fahrt "rückwärts" dient, ist in Figur 3 dargestellt und mit dem Bezugszeichen 3 gekennzeichnet. In jeder der drei Fahrbereiche, 0-14km/h, 0-25 km/h und 0-50 km/h, kann getrennt für die Fahrt "vorwärts" und die Fahrt "rückwärts" jeweils ein Tempomat-Geschwindigkeitssollwert abgespeichert und im Bedarfsfall auch entsprechend reaktiviert werden. Ferner weist das Kontrollinstrument 3 noch einen Umschalter 3.1 auf, um die wechselseitige Anzeige zwischen den gespeicherten Tempomat-Geschwindigkeitssollwerten für die Fahrt "vorwärts" und die Fahrt "rückwärts" am Leistungsmonitor 3.2 vornehmen zu können.

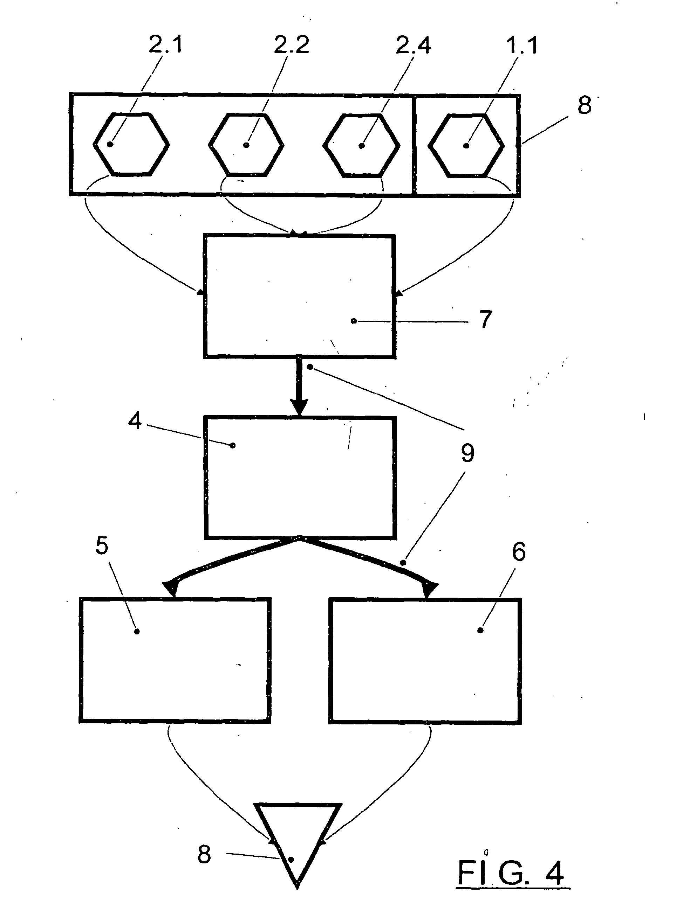

Die Fig. 4 zeigt einen Signalflussplan der erfindungsgemäßen Vorrichtung zur Regelung der Fahrgeschwindigkeit eines Kraftfahrzeugs. Mit der im Bereich der Armlehne des Fahrzeugs angeordneten Tempomat-Funktionsgruppe erfolgt die Eingabe der Geschwindigkeitssollwerte für die einzelnenFahrbereiche, nämlich drei für jede Fahrtrichtung. Diese Informationen werden mittels einer linearen Busstruktur, dem fahrzeuginternen CAN-Bus, zum Fahrregler 4 übertragen. Der Vorteil in der Nutzung des CAN-Bus zur Informationsübertragung besteht u. a. darin, dass zur Realisierung eines geforderten Echtzeitverhaltens hohe Übertragungsraten im Bereich zwischen 125 kBit/s bis 1Mbit/s realisiert werden können. Damit ist sichergestellt, dass eine vom Fahrer vorgenommene Handlung umgehend an beispielsweise einem Aktor umgesetzt wird. Der Fahrregler 4 regelt in Abhängigkeit der ihm zugeführten Informationen selbsttätig die Motordrehzahl und die Getriebeübersetzung mittels eines Motorreglers 6 bzw. eines Getriebereglers 5. Üblicherweise wird ein stufenloses, mechanisches Getriebe in Form eines Umschlingungsgetriebes eingesetzt, wobei ein Umschlingungselement der Kraftübertragung dient.

Das Kernelement, der Variator, besteht aus zwei Kegelscheibenpaaren. Durch eine axiale Änderungen des Scheibenabstands wird der Laufradius des Umschlingungselements und damit die Übersetzung geändert. Die Kraftübertragung zwischen dem Scheibenpaar und dem Umschlingungselement erfolgt durch Reibung.

### LISTE DER BEZUGSZEICHEN

- 1: Shuttle-Funktionsgruppe
- 1.1: Shuttle-Bedienhebel
- 1.2: Schaltstellung "vorwärts"
- 1.3: Schaltstellung "rückwärts"
- 1.4: Neutralstellung
- 2: Tempomat-Funktionsgruppe
- 2.1: up-Taste
- 2.2: down-Taste
- 2.3: Lenkbremse
- 2.4: resume-Taste
- 2.5: Verstellelement
- 3: Kontrollinstrument
- 3.1: Umschalter
- 3.2: Leistungs-Monitor
- 4: Fahrregler
- 5: Getrieberegler
- 6: Motorregler
- 7: Armlehne
- 8: Fahrgeschwindigkeit
- 9: Fahrzeuginterner CAN-BUS

## Patentansprüche

1. Vorrichtung zur Regelung der Fahrgeschwindigkeit eines Kraftfahrzeugs, bestehend aus:
- einer Tempomat-Funktionsgruppe (2) zur Regelung der Fahrgeschwindigkeit auf einen innerhalb eines Tempomat-Geschwindigkeitssollwertbereiches beliebig einstellbaren Tempomat-Geschwindigkeitssollwert für verschiedene Fahrbereiche jeweils für die Fahrt "vorwärts" und die Fahrt "rückwärts", wobei die Tempomat-Funktionsgruppe (2) ein Verstellelement (2.5) sowie eine up-Taste (2.1) zur Erhöhung, eine down-Taste (2.2) zur Verringerung und eine resume-Taste (2.4) zur Wiederaufnahme/Ausschalten des Tempomat-Geschwindigkeitssollwertes aufweist **gekennzeichnet dadurch, dass** der Tempomat-Geschwindigkeitssollwert durch eine kurzzeitige sequentielle Betätigung der up-Taste (2.1) bzw. der down-Taste (2.2) inkrementiell erhöht oder dekrementiell verringert wird und das Inkrement bzw. das Dekrement eine Funktion der aktuellen Fahrgeschwindigkeit ist
- einem Kontrollinstrument (3) mit einem Leistungs-Monitor (3.2), welcher der optischen Anzeige der in den verschiedenen Fahrbereichen eingestellten Geschwindigkeitssollwerte für die Fahrt "vorwärts" und die Fahrt "rückwärts" dient,
- einem Fahrregler (4), der in Abhängigkeit der eingestellten Fahrparameter derart ausgebildet ist, dass eine lastabhängige Motordrehzahl und lastabhängige Getriebeübersetzung mittels des Motorreglers und des Getriebereglers zur Einstellung einer des Tempomat-Geschwindigkeitssollwertes entsprechenden Fahrgeschwindigkeit (8) verwendet werden und
- einer Shuttle-Funktionsgruppe (1) zur Auswahl der Fahrtrichtung, enthaltend einen Shuttle-Bedienhebel (1.1) mit den Schaltstellungen "vorwärts" (1.2), "rückwärts" (1.3) und "neutral" (1.4), wobei mit den Schaltstellungen "vorwärts" (1.2) und "rückwärts" (1.3) ein Fahrgeschwindigkeitsbegrenzungsbetrieb aktiviert wird.

2. Verfahren zur Regelung der Fahrgeschwindigkeit eines Kraftfahrzeugs mit einer Vorrichtung gemäß Anspruch 1, **dadurch gekennzeichnet, dass** die Aktivierung des Fahrgeschwindigkeitbegrenzungsbetriebs bei Überschreiten einer Minimalgeschwindigkeit zur Übernahme der aktuellen Fahrgeschwindigkeit als aktueller Tempomat-Geschwindigkeitssollwert durch eine Betätigung der up-Taste (2.1) ausgelöst wird oder bei Unterschreiten einer Minimalgeschwindigkeit ein zuvor gespeicherter Tempomat-Geschwindigkeitssollwert durch gleichzeitige Betätigung der resume-Taste (2.4) und des Shuttle-Bedienhebels (1.1) reaktiviert wird.

3. Verfahren nach Anspruch 2, **dadurch gekennzeichnet, dass** die Minimalgeschwindigkeit 1 km/h beträgt.

4. Verfahren nach Anspruch 2 oder 3, **dadurch gekennzeichnet, dass** eine Deaktivierung des Fahrgeschwindigkeitbegrenzungsbetriebs entweder durch eine Betätigung der resume-Taste (2.4) oder durch Betätigung der Fußbremse oder durch eine Inanspruchnahme der Motorstaubremse oder durch eine Betätigung der Handbremse ausgelöst wird.

5. Verfahren nach einem der Ansprüche 2 bis 4, bei dem der Tempomat-Geschwindigkeitssollwert bei aktiviertem Fahrgeschwindigkeitbegrenzungsbetrieb durch eine kurzzeitige sequentielle Betätigung der up-Taste (2.1) bzw. der down-Taste (2.2) inkrementiell erhöht oder dekrementiell verringert wird, **dadurch gekennzeichnet, dass** das Inkrement bzw. das Dekrement eine Funktion der aktuellen Fahrgeschwindigkeit ist.

6. Verfahren nach Anspruch 5, **dadurch gekennzeichnet, dass** der Tempomat-Geschwindigkeitssollwert durch eine stetige und längere Betätigung der up-Taste (2.1) bzw. der down-Taste (2.2) kontinuierlich, proportional zur Betätigungszeit erhöht bzw. verringert wird.

7. Verfahren nach Anspruch 5 oder 6, **dadurch gekennzeichnet, dass** der Tempomat-Geschwindigkeitssollwert an die aktuelle Fahrgeschwindigkeit durch eine stetige und längere Betätigung der up-Taste (2.1) angepasst und als neuer Tempomat-Geschwindigkeitssollwert abgespeichert wird.

8. Verfahren nach Anspruch 5 oder 6, **dadurch gekennzeichnet, dass** die Veränderung des Tempomat-Geschwindigkeitssollwertes im Fahrzeugstillstand realisiert wird.

9. Verfahren nach Anspruch 5 oder 6, **dadurch gekennzeichnet; dass** der Tempomat-Geschwindigkeitssollwert bei deaktiviertem Fahrgeschwindigkeitbegrenzungsbetrieb durch eine mittels des Shuttle-Hebels (1.1) eingestellte Fahrtrichtungsauswahl und gleichzeitige Betätigung der up-Taste (2.1) bzw. der down-Taste (2.2) ein Tempomat-Geschwindigkeitssollwert in den Fahrregler (4) übernommen und dort als aktueller Tempomat-Geschwindigkeitssollwert abgespeichert wird.

10. Verfahren nach Anspruch 9, **dadurch gekennzeichnet, dass** die Veränderung des Tempomat-Geschwindigkeitssollwertes im Fahrzeugstillstand realisiert wird.

## Claims

1. Motor vehicle road speed regulator device comprising:
- a cruise controller functional group (2) adapted to regulate the road speed to a speed set point value that is freely adjustable in a speed set point value range for different ranges of motion, respectively for "forward" motion and "reverse" motion, subject to which the cruise controller functional group (2) includes a setting element (2.1), an up or increase key (2.1), a down or decrease key (2.2) and a reselector key (2.4) for reselecting/cancelling the speed set point value of the cruise controller, **characterized in that** the speed set point value of the cruise controller is incremented or decremented by brief sequential actuation of the up key (2.1) or the down key (2.2), respectively, and the increment or the decrement is a function of the actual road speed,
- a monitoring instrument (3) including a power monitor (3.2) that is used for optical display of the speed set point values set in the ranges of motion for "forward" motion and "reverse" motion,
- a speed regulator (4) which is configured as a function of the set motion parameters so that an engine speed that is a function of the load and a gear ratio that is a function of the load are applied by means of the engine regulator and the gearbox regulator to set a road speed (8) corresponding to the speed set point value of the cruise controller, and
- a forward/reverse selector functional group (1) adapted to select forward or reverse motion, comprising a forward/reverse selector lever (1.1) having "forward" position (1.2), a "reverse" position (1.3), and a "neutral" position (1.4), subject to which a road speed limitation regime is activated for the "forward" position (1.2) and for the "reverse" position (1.3).

2. Motor vehicle road speed regulation method, the motor vehicle including a device according to claim 1, **characterized in that** activation of the road speed limitation regime in the event of exceeding a minimum value is triggered by actuating the up key (2.1) in order to adopt the real speed as the real speed set point value of the cruise controller or in the event of dropping below a minimum speed a previously stored cruise controller set point value is reactivated by simultaneously actuating the reselector key (2.4) and the forward/reverse selector lever (1.1).

3. Method according to claim 2, **characterized in that** the minimum speed is 1 kph.

4. Method according to claim 2 or 3, **characterized in that** a deactivation of the road speed limitation regime is triggered by actuating the reselector key (2.4), by actuating the foot brake, by using the exhaust retarder or by actuating the parking brake.

5. Method according to any claim 2 to 4, wherein the speed set point value of the cruise controller value, when the road speed limitation regime is activated, is respectively incremented or decremented by brief sequential actuation of the up key (2.1) or the down key (2.2), **characterized in that** the increment or the decrement is a function of the real road speed.

6. Method according to claim 5, **characterized in that** the speed set point value of the cruise controller is increased or decreased continuously in proportion to the duration of continuous and prolonged actuation of the up key (2.1) or the down key (2.2), respectively.

7. Method according to claim 5 or 6, **characterized in that** the speed set point value of the cruise controller is adapted to the real road speed by continuous and prolonged actuation of the up key (2.1) and is stored as a new speed set point value of the cruise controller.

8. Method according to claim 5 or 6, **characterized in that that** the modification of the set point value of the cruise controller is effected when the vehicle is stopped.

9. Method according to claim 5 or 6, **characterized in that** that, when the road speed limitation regime is deactivated, the speed set point value of the cruise controller is set in the speed regulator (4) by selecting forward or reverse motion as set by the forward/reverse selector lever (1.1) and simultaneous actuation of the up key (2.1) or the down key (2.2) and is stored therein as a new set point value of the cruise controller.

10. Method according to claim 9, **characterized in that** that the modification of the set point value of the cruise controller is effected when the vehicle is stopped.

## Revendications

1. Dispositif de régulation de vitesse de marche d'un véhicule à moteur, comprenant :
- un groupe fonctionnel de régulateur de croisière (2) destiné à réguler la vitesse de marche sur une valeur de consigne de vitesse réglable librement dans une plage de valeur de consigne de vitesse pour différentes plages de marche, respectivement pour la marche « avant » et la marche « arrière », moyennant quoi le groupe fonctionnel de régulateur de croisière (2) comporte un élément de réglage (2.5), une touche « up » (2.1) pour augmenter, une touche « down » (2.2) pour diminuer et une touche « resume » (2.4) pour reprendre/mettre hors circuit la valeur de consigne de vitesse du régulateur de croisière, **caractérisé en ce que** la valeur de consigne de vitesse du régulateur de croisière augmente incrémentalement ou diminue décrémentalement par un actionnement séquentiel bref respectif de la touche « up » (2.1) ou de la touche « down » (2.2) et l'incrément ou le décrément est une fonction de la vitesse de marche réelle,
- un instrument de contrôle (3) comportant un moniteur de puissance (3.2), qui sert à un affichage optique des valeurs de consigne de vitesse réglées dans les différentes plages de marche pour la marche « avant » et la marche « arrière »,
- un régulateur de vitesse (4), qui est configuré en fonction des paramètres de marche réglés de telle sorte qu'un régime moteur fonction de la charge et un rapport de démultiplication fonction de la charge sont appliqués au moyen du régulateur de moteur et du régulateur de boîte de vitesses pour régler une vitesse de marche (8) correspondant à la valeur de consigne de vitesse du régulateur de croisière, et
- un groupe fonctionnel de sélection de marche (1) destiné à sélectionner le sens de marche, comprenant un levier de commande de sélection de marche (1.1) comportant les positions de commutation «marche avant » (1.2), « marche arrière » (1.3) et « point mort » (1.4), moyennant quoi, avec les positions de commutation « marche avant » (1.2) et « marche arrière » (1.3), un régime de limitation de vitesse de marche est activé.

2. Méthode de régulation de vitesse de marche d'un véhicule à moteur, comprenant un dispositif selon la revendication 1, **caractérisée en ce que** l'activation du régime de limitation de vitesse de marche, en cas de dépassement supérieur d'une vitesse minimale, est déclenchée par b un actionnement de la touche « up » (2.1) afin de prendre en charge la vitesse réelle en tant que valeur réelle de consigne de vitesse du régulateur de croisière ou, en cas de dépassement inférieur d'une vitesse minimale, une valeur de consigne du régulateur de croisière précédemment enregistrée est réactivée par un actionnement simultané de la touche « resume » (2.4) et du levier de commande de sélection de marche avant-arrière (1.1).

3. Méthode selon la revendication 2, **caractérisée en ce que** la vitesse minimale est de 1 km/h.

4. Méthode selon la revendication 2 ou 3, **caractérisée en ce qu'**une désactivation du régime de limitation de vitesse de marche est déclenchée par un actionnement de la touche « resume » (2.4), par actionnement du frein à pied, par une utilisation du ralentisseur à l'échappement ou par un actionnement du frein à main.

5. Méthode selon l'une quelconque des revendications 2 à 4, dans laquelle la valeur de consigne de vitesse du régulateur de croisière, lorsque le régime de limitation de vitesse de marche est activé, augmente respectivement de façon incrémentale ou diminue de façon décrémentale par un bref actionnement séquentiel de la touche « up » (2.1) ou de la touche « down » (2.2), **caractérisée en ce que** l'incrément ou le décrément est une fonction de la vitesse de marche réelle.

6. Méthode selon la revendication 5, **caractérisée en ce que** la valeur de consigne de vitesse du régulateur de croisière est augmentée ou diminuée continuellement, en proportion du temps d'actionnement, par un actionnement continu et prolongé, respectivement de la touche « up » (2.1) ou de la touche « down » (2.2).

7. Méthode selon la revendication 5 ou 6, **caractérisée en ce que** la valeur de consigne de vitesse du régulateur de croisière est adaptée à la vitesse de marche réelle par un actionnement continu et prolongé de la touche « up » (2.1) et est enregistrée en tant que nouvelle valeur de consigne de vitesse du régulateur de croisière.

8. Méthode selon la revendication 5 ou 6, **caractérisée en ce que** la modification de la valeur de consigne du régulateur de croisière est implémentée à l'arrêt du véhicule.

9. Méthode selon la revendication 5 ou 6, **caractérisée en ce que,** lorsque le régime de limitation de vitesse de marche est désactivé, la valeur de consigne de vitesse du régulateur de croisière est prise en charge dans le régulateur de vitesse (4) par une sélection du sens de marche réglée au moyen du levier de sélection de marche avant-arrière (1.1) et un actionnement simultané de la touche « up » (2.1) ou de la touche « down » (2.2) et y est enregistrée en tant que nouvelle valeur de consigne de régulateur de croisière.

10. Méthode selon la revendication 9, **caractérisée en ce que** la modification de la valeur de consigne du régulateur de croisière est implémentée à l'arrêt du véhicule.
